# EUROPEAN PATENT APPLICATION

(11) **EP 4 844 518 A1**
(43) Date of publication of application: **25.11.2026**
(21) Application number: 25741989.5
(22) Date of filing: 16.01.2025
(51) Int. Cl.: G05D 1/622, G05D 1/633, G05D 1/693

(54) **ROUTE PLANNING DEVICE, DRIVING ASSISTANCE SYSTEM, ROUTE PLANNING METHOD, AND ROUTE PLANNING PROGRAM**

(30) Priority: 16.01.2024 JP 2024004870
(71) Applicant: KAWASAKI JUKOGYO KABUSHIKI KAISHA, Kobe-shi, Hyogo 650-8670 (JP)
(72) Inventor: OTSUKI Satoshi, Kobe-shi, Hyogo 650-8670 (JP); NAKASHIMA Kenichi, Kobe-shi, Hyogo 650-8670 (JP); HATANAKA Takeshi, Meguro-ku, Tokyo 152-8550 (JP); HATTA Naoki, Meguro-ku, Tokyo 152-8550 (JP)
(74) Representative: Arnold & Siedsma
(86) International application number: PCT/JP2025/001183
(87) International publication number: WO 2025/154764

(57) **Abstract**

A route planning device 100 includes: an acquirer 45 that acquires obstacle information including information on a position of an obstacle; and a generator 46 that generates a target route of a mover 1 from a start pint S to a goal G based on the obstacle information such that the target route avoids interference between the mover 1 and the obstacle. The generator 46 searches for candidates of the target route and determines a target route based on route costs from among the candidates. Each of the route costs includes a meandering cost related to a degree of meandering in each of the candidates.

## Description

### FIELD

The technique disclosed here relates to a route planning device, a driving assistance system, a route planning method, and a route planning program.

### BACKGROUND

A device that plans a route of a mover is known to date. For example, in route planning disclosed in Patent Document 1, a route that avoids interference with other movers is planned in consideration of movement of the other movers.

### CITATION LIST

### PATENT DOCUMENT

Patent Document 1: Japanese Patent Application Publication No. 2020-4095

### SUMMARY

In the route planning of Patent Document 1, safety is ensured by planning a route that avoids interference with other movers. However, there is room for further improvement from the perspective of risk avoidance.

It is therefore an object of the technique disclosed here to plan a route that can avoid risks.

A route planning device disclosed here includes: an acquirer that acquires obstacle information including information on a position of an obstacle; and a generator that generates a target route of a mover from a start point to a goal based on the obstacle information such that the target route avoids interference between the mover and the obstacle, wherein the generator searches for candidates of the target route and determines the target route based on route costs from among the candidates, and each of the route costs includes a meandering cost related to a degree of meandering in each of the candidates.

A driving assistance system disclosed here includes: the route planning device; and a display that displays the target route from the route planning device and is mounted on a mover that performs automated driving.

A route planning method disclosed here includes: acquiring obstacle information including information on an obstacle; and generating a target route of a mover from a start point to a goal based on the obstacle information such that the target route avoids interference between the mover and the obstacle, wherein the generating the target route includes searching for candidates of the target route and determining the target route based on route costs from among the candidates, and each of the route costs includes a meandering cost related to a degree of meandering in each of the candidates.

A route planning program disclosed here causes a computer to execute the functions of: acquiring obstacle information including information on a position of an obstacle; and generating a target route of a mover from a start point to a goal based on the obstacle information such that the target route avoids interference between the mover and the obstacle, wherein the function of generating the target route searches for candidates of the target route and determines the target route based on route costs from among the candidates, and each of the route costs includes a meandering cost related to a degree of meandering in each of the candidates.

The route planning device described above is capable of planning a route that can reduce risks.

The driving assistance system described above is capable of planning a route that can reduce risks.

The route planning method described above is capable of planning a route that can reduce risks.

The route planning program described above is capable of planning a route that can reduce risks.

### BRIEF DESCRIPTION OF THE DRAWINGS

[FIG. 1] FIG. 1 is a schematic plan view illustrating a state where movers are navigating the ocean.
[FIG. 2] FIG. 2 is a view illustrating a schematic hardware configuration of a mover.
[FIG. 3] FIG. 3 is a view illustrating a hardware configuration of a controller.
[FIG. 4] FIG. 4 is a block diagram of a processor.
[FIG. 5] FIG. 5 is a view illustrating a hardware configuration of a route planning device.
[FIG. 6] FIG. 6 is a functional block diagram of the processor.
[FIG. 7] FIG. 7 shows an example of a search space.
[FIG. 8] FIG. 8 is a schematic view illustrating candidates searched in a search space.
[FIG. 9] FIG. 9 is an explanatory graph for explaining search for a new node.
[FIG. 10] FIG. 10 is an explanatory graph showing a positional relationship between one node and a new node in a global coordinate system of the mover.
[FIG. 11] FIG. 11 is a two-dimensional schematic view of searched candidates.
[FIG. 12] FIG. 12 is a flowchart of route planning.
[FIG. 13] FIG. 13 is a flowchart of automated driving.
[FIG. 14] FIG. 14 shows an example of an image displayed by a display.

### DESCRIPTION OF EMBODIMENTS

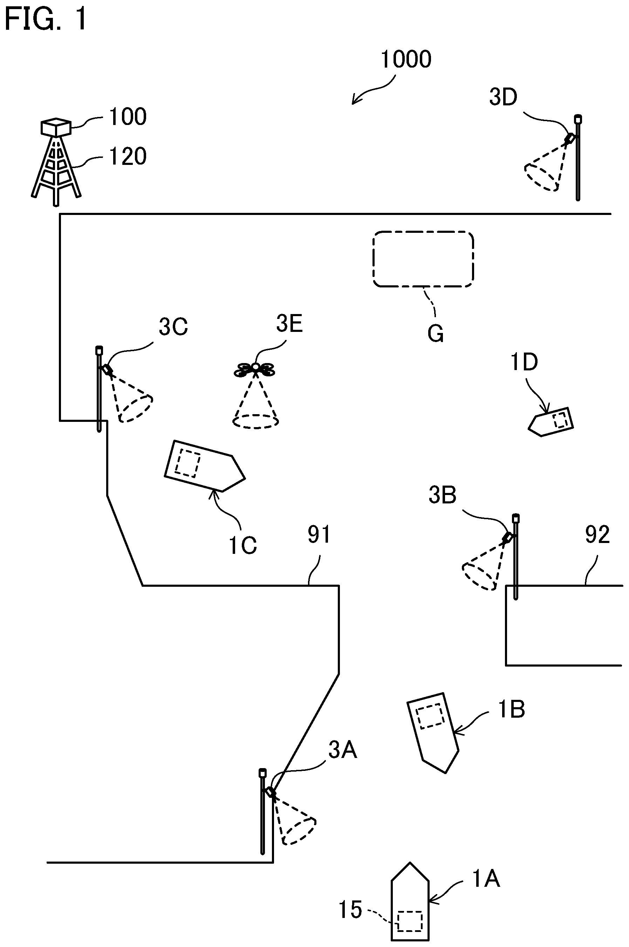

An exemplary embodiment will be described in detail hereinafter with reference to the drawings. FIG. 1 is a schematic plan view illustrating a state where a mover 1 is navigating the ocean. The mover 1 performs automated driving. A driving assistance system 1000 includes a route planning device 100 that generates a target route of the mover 1, and a display 15 that is mounted on the mover 1 that performs automated driving and displays the target route from the route planning device 100. In this example, the mover 1 is a ship. The movers 1 are present inside and outside a harbor illustrated in FIG. 1. The movers 1 are distinguished from each other by alphabet suffixes after reference numeral "1." For example, the movers 1 in the sea area in FIG. 1 include a mover 1A, a mover 1B, a mover 1C, and a mover 1D. When the movers 1 are not distinguished from each other, the mover 1 is referred to simply as the "mover 1." The harbor in FIG. 1 includes a pier 91, a breakwater 92, and others, as obstacles. For one mover 1, the other mover 1 is an obstacle.

The route planning device 100 generates a target route of each mover 1 that performs automated driving. In a case where the movers 1 perform automated driving, the route planning device 100 generates an individual target route for each of the movers 1. The route planning device 100 is located in a control tower 120. The route planning device 100 communicates with a target mover 1 and transmits a target route to the mover 1. The target mover 1 performs automated driving along the target route. The following description will be directed to the case of generating a target route of the mover 1A to a goal G.

The display 15 displays a target route transmitted from the route planning device 100. Specifically, the display 15 presents the target route in automated driving to a user, that is, a passenger. Additionally, the display 15 may display target routes to allow the user to select a target route for use in automated driving.

### -Mover-

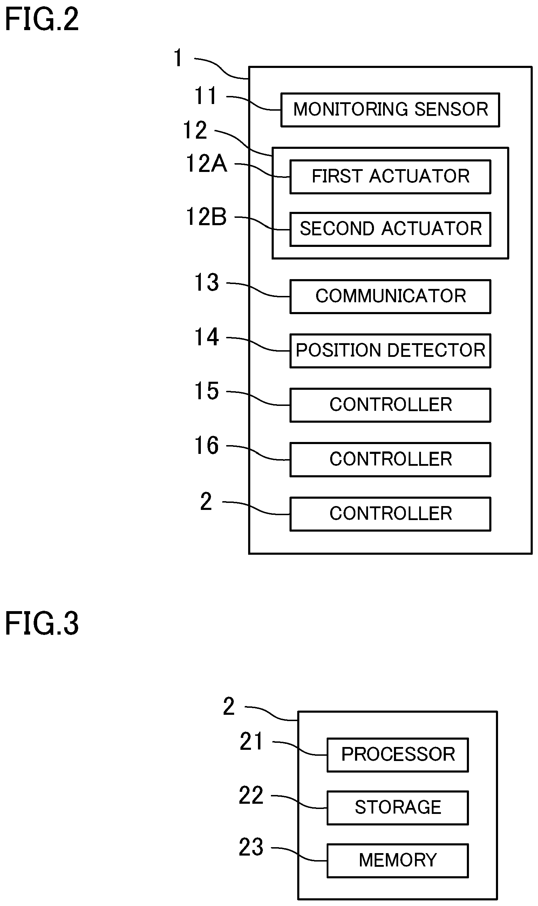

The mover 1 performs automated driving, specifically, autonomous driving. The mover 1 may switch between manual driving and automated driving. FIG. 2 is a view illustrating a schematic hardware configuration of the mover 1. The mover 1 includes a monitoring sensor 11, an actuator 12, a communicator 13, a position detector 14, the display 15, an inputter 16, and a controller 2.

The monitoring sensor 11 acquires monitoring information of a predetermined range in an environment where the mover 1 moves. Examples of the monitoring information can include geographic features, buildings, planimetric features, facilities, and movers. The monitoring sensor 11 includes at least one of a camera, a light detection and ranging (LiDAR) sensor, an infrared sensor, a laser rangefinder, and a Doppler LiDAR sensor. For example, the camera takes a static image or a moving image. The laser range finder may employ a green laser. In this example, the monitoring sensor 11 is a LiDAR sensor. The monitoring sensor 11 acquires point group data of objects in a predetermined monitoring area as monitoring information.

The actuator 12 is a driving source of the mover 1. The actuator 12 may include a first actuator 12A and a second actuator 12B. For example, in a case where the mover 1 is a ship, the first actuator 12A is an engine or an electric motor that drives propellers, and the second actuator 12B is an engine or an electric motor that drives a rudder.

The communicator 13 wirelessly communicates with an external device. The communicator 13 communicates with the route planning device 100, for example. The position detector 14 detects a position of the mover 1. For example, the position detector 14 is a global navigation satellite system (GNSS) receiver or an inertial measurement unit (IMU).

The display 15 is, for example, a liquid crystal display or an organic EL display. The display 15 may display target routes. Specifically, the display 15 presents options of target routes to the user.

The inputter 16 is a device that is operated by the user, that is, a device through which the user inputs an operation. The inputter 16 is, for example, a keyboard, a mouse, or a button. The display 15 and the inputter 16 may be integrated. For example, the display 15 and the inputter 16 may be a touch panel.

FIG. 3 illustrates a schematic hardware configuration of the controller 2. The controller 2 controls the entire mover 1. The controller 2 controls automated driving of the mover 1. Specifically, the controller 2 operates the actuator 12 to move the mover 1. The controller 2 includes a processor 21, a storage 22, and a memory 23.

The processor 21 performs various computation processes. For example, the processor 21 is a processor such as a central processing unit (CPU). The processor 21 may be a micro controller unit (MCU), a micro processor unit (MPU), a field programmable gate array (FPGA), a programmable logic controller (PLC), or system LSI, for example.

The storage 22 stores programs and various types of data to be executed by the processor 21. For example, the storage 22 stores a control program. The storage 22 may be, for example, a nonvolatile memory, a hard disc drive (HDD), or a solid state drive (SSD). The memory 23 temporarily stores data or other information. For example, the memory 23 is a volatile memory.

The processor 21 operates the actuator 12 so that the mover 1 thereby performs autonomous driving. The processor 21 receives a target route from the route planning device 100. The processor 21 operates the actuator 12 based on detection results of the monitoring sensor 11 and the position detector 14 such that the mover 1 moves along the target route. The processor 21 may cause the mover 1 to perform collision avoidance operation as necessary during movement of the mover 1 along the target route. The processor 21 may transmit the detection results of the monitoring sensor 11 and the position detector 14 to the route planning device 100 in order to generate the target route.

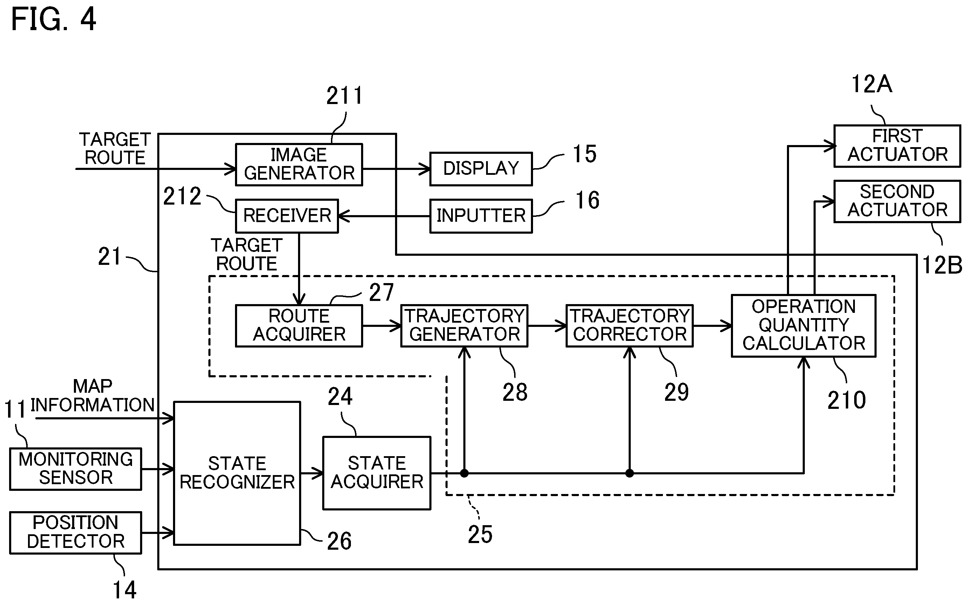

FIG. 4 is a functional block diagram of the processor 21. The processor 21 reads control programs from the storage 22 and develops the programs to the memory 23 to thereby perform various functions. Specifically, the processor 21 functions as a state acquirer 24 that acquires a state of a subject mover 1 and a state of another mover 1, and a computer 25 that computes an instruction operation quantity of the actuator 12. The computer 25 computes the instruction operation quantity of the actuator 12 based on the state of the subject mover 1 and the state of the other mover 1 acquired by the state acquirer 24. In this example, the processor 21 further functions as a state recognizer 26 that recognizes the state of the subject mover 1 and the state of the other mover 1. In addition, the processor 21 further functions as an image generator 211 that generates an image to be displayed by the display 15, and a receiver 212 that receives an operation input of the user from the inputter 16.

The image generator 211 generates an image and outputs the generated image to the display 15. The image generator 211 generates an image of a target route from the route planning device 100. For example, the image generator 211 generates a fairway map indicating a target route. In a case where target routes are sent from the route planning device 100, the image generator 211 generates multiple images of the target routes. In a case where priorities are assigned to the target routes, the image generator 211 also displays the priorities of the target routes. The priorities are displayed in various manners. For example, the image generator 211 may display the priorities of the target routes, that is, numerical values, in association with the individual target routes. Alternatively, the image generator 211 may represent the priority of each target route by the color of each target route. That is, the image generator 211 may color-code the target routes in accordance with the priorities thereof. Alternatively, the image generator 211 may represent the priority of each target route by a line type of the target route.

The image generator 211 may display the priorities of only some of the target routes, rather than all the target routes. For example, in the case of displaying three target routes, the image generator 211 marks and displays the target route with the first priority as being first, and the target routes with the second and third priorities may be displayed without marking the priorities. That is, the image generator 211 may display the target route with the first priority separately from the target routes with priorities other than the first priority, for example, the target routes with the second priority and the third priority. The target route with the second priority and the target route with the third priority may not be distinguished from each other in the display. The distinction between the target route with the first priority and the target routes with the other priorities may be made by the color, line type, of the like of the target route.

In a case where a route cost described later is sent from the route planning device 100 together with the target route, the image generator 211 may display the corresponding route cost together with the target route. The image generator 211 may display the route cost as the priority. That is, the smaller the route cost, the lower the priority.

The receiver 212 receives selection of one target route by the user from among target routes. The user can select one target route for use in automated driving from among target routes displayed on the display 15 by manipulating the inputter 16. When the receiver 212 receives a selection input from the user, the receiver 212 sets the selected target route as the target route for use in autonomous driving.

The state acquirer 24 performs the function of acquiring the state of the subject mover 1 and the function of acquiring the state of the other mover 1. The state acquirer 24 may further acquire the state of the environment in addition to the state of the subject mover 1 and the state of the other mover 1. The state acquirer 24 acquires the state of the subject mover 1, the state of the other mover 1, and the state of the environment from the state recognizer 26.

The state recognizer 26 performs the function of acquiring the state of the subject mover 1 and the function of acquiring the state of the other mover 1. The state recognizer 26 outputs the state of the subject mover 1 and the state of the other mover 1 to the state acquirer 24. The state recognizer 26 may obtain the state of the environment in addition to the state of the subject mover 1 and the state of the other mover 1, and output the states to the state acquirer 24.

The state recognizer 26 receives map information, information on the other mover 1, a detection result of the monitoring sensor 11, and a detection result of the position detector 14. The map information and information on the other mover 1 are, for example, transmitted from the route planning device 100 or the control tower 120 and stored in the storage 22. The map information includes at least one of roads, passages, fairways, or planimetric features (e.g., buildings, trees, and rocks, whether natural or artificial, located on land or at sea). The map information may be information on general maps such as road maps, facility maps, and fairway maps. The map information may include information on obstacles. The information on obstacles includes at least one of the position, velocity, or type of the obstacles. Examples of the obstacles may include planimetric features, buildings, movers other than the subject mover 1 (i.e., other movers 1), construction sites, rough terrain, shallow water, aquaculture farms, and anchorages. Examples of the information on the other mover include the type of the other mover.

For example, the state recognizer 26 estimates the state of the subject mover 1 using a Kalman filter. The state recognizer 26 may execute self-position estimation using a simultaneous localization and mapping technique (SLAM). The state recognizer 26 may estimate the magnitudes of the other movers 1 or the relative velocity of the other movers 1 relative to the subject mover 1 based on the detection results of the position detector 14. The state recognizer 26 may estimate the state of obstacles in the environment. The state recognizer 26 outputs information on the subject mover 1, such as the current position, velocity, and others of the subject mover 1, information on other movers 1, such as the relative positions, velocities, and others, of the other movers 1 relative to the subject mover 1, information on obstacles, such as the relative positions, velocities, and others of the obstacles relative to the subject mover 1, and information on disturbances.

That is, the state recognizer 24 acquires the map information including the positions of obstacles and others, the information on the subject mover 1 such as the current position, velocity, and others of the subject mover 1, the information on other movers 1 such as the relative positions, velocities, and others of the other movers 1 relative to the subject mover 1, the information on obstacles such as the relative positions, velocities, and others of the obstacles relative to the subject mover 1, and information on disturbances.

The computer 25 performs the function of generating a target trajectory of the subject mover 1. The target trajectory is a relatively short-term target trajectory from the current position. The computer 25 further realizes the function of computing a control input of the actuator 12 based on the target trajectory. Specifically, the computer 25 includes a route acquirer 27 that acquires a target route of the subject mover 1, a trajectory generator 28 that generates a target trajectory of the subject mover 1, a trajectory corrector 29 that corrects the target trajectory, and an operation quantity calculator 210 that calculates an operation quantity of the actuator 12 to follow the target trajectory.

The route acquirer 27 receives the target route. The route acquirer 27 receives the target route from the route planning device 100. In this example, since the user selects one target route from the target routes output from the route planning device 100, the route acquirer 27 receives the selected target route from the receiver 212.

The trajectory generator 28 generates a target trajectory from the current position of the subject mover 1 to a way point. The way point is a goal relatively close to the current position. The trajectory generator 28 receives the target route from the route acquirer 27, and receives the map information and the information on the subject mover 1 from the state acquirer 24. The trajectory generator 28 sets the way point based on the target route. The trajectory generator 28 generates the target trajectory of the subject mover 1 by a predetermined method (e.g., line-of-sight guidance law).

The trajectory corrector 29 corrects the target trajectory generated by the trajectory generator 28 as necessary. For example, the trajectory corrector 29 corrects the target trajectory so that the subject mover 1 can avoid an obstacle. The trajectory corrector 29 receives the map information, the information on the subject mover 1, the information on the other mover 1, and the information on disturbances. For example, the trajectory corrector 29 corrects the target trajectory using nonlinear model predictive control (NMPC). Accordingly, the target trajectory that avoids obstacles while following the target trajectory generated by the trajectory generator 28 as closely as possible is generated. The trajectory corrector 29 outputs the goal and the target velocity as the target trajectory.

The operation quantity calculator 210 calculates an operation quantity, that is, a control input, of the actuator 12 corresponding to the target trajectory. The operation quantity calculator 210 calculates an instruction force for causing the subject mover 1 to follow the target trajectory. The operation quantity calculator 210 receives the map information, the information on the subject mover 1, the information on other mover 1, and the information on disturbances from the state acquirer 24. The operation quantity calculator 210 performs, for example, PID control. The control of the operation quantity calculator 210 is not limited to PID control and may be robust control or the like. At this time, the operation quantity calculator 210 may limit an instruction velocity corresponding to the target trajectory by using a control barrier function (CBF), for example.

Further, the operation quantity calculator 210 distributes the instruction force to the actuators 12 and calculates the operation quantities of the actuators 12. In a case where each of the actuator 12 is an electric motor, the operation quantity are the rotation speed or the torque of the electric motor. In a case each actuator 12 is an engine, for example, the operation quantity is a fuel injection amount.

Each actuator 12 operates in accordance with the instruction operation quantity. The actuator 12 may include a dedicated controller for operating the actuator 12. For example, in the case where the actuator 12 is an electric motor, the actuator 12 further includes a servo amplifier. In this case, the servo amplifier operates the electric motor in accordance with the instruction operation quantity. Consequently, the subject mover 1 exerts thrust and moves toward the goal.

The route planning device 100 generates a target route of a mover 1. The route planning device 100 may generate a target route of the mover 1. Specifically, a mover 1 that has the function of performing automated driving and is capable of receiving the target route from the route planning device 100 can be the subject of route planning. For example, the route planning device 100 receives a request from the mover 1, generates a target route, and transmits the target route.

The route planning device 100 generates a target route that avoids interference with obstacles. The route planning device 100 may acquire obstacle information from monitors 3 that detect obstacles. In particular, the route planning device 100 may acquire information on moving obstacles from the monitors 3. The route planning device 100 may also store information on fixed obstacles such as planimetric features, buildings, construction sites, rough terrain, shallow water, and aquaculture farms in advance.

The monitors 3 include fixed monitors 3 and mobile monitors 3. For example, when distinguishing each of the monitors 3, an alphabet subscript is attached after reference numeral "3" (see FIG. 1). In this example, a monitor 3A, a monitor 3B, a monitor 3C, and a monitor 3D are fixed monitors. A monitor 3E is a mobile monitor. When the monitor 3A, the monitor 3B, the monitor 3C, the monitor 3D, and the monitor 3E are not distinguished from one another, the monitor is simply referred to as the "monitor 3." Each of the monitors 3 include a monitoring sensor that acquires monitoring information in a predetermined range. The monitoring information can include geographic features, buildings, planimetric features, facilities, movers, airflow directions, tidal current, and so forth. The monitoring sensor includes at least one of a camera, light detection and ranging (LiDAR), an infrared sensor, a laser range finder, a Doppler LiDAR, or an anemometer. For example, the camera takes a static image or a moving image. The laser range finder may employ a green laser.

The fixed monitors 3 are fixedly installed in the environment. The environment refers to the surrounding environment in which the movers 1 can move. The fixed monitors 3 are installed on, for example, buildings, street lights, or utility poles. Alternatively, the fixed monitors 3 are installed on dedicated structures such as towers. The monitoring ranges of the fixed monitors 3 may be unchangeable or changeable. In this example, each of the fixed monitors 3 is configured so that the orientation thereof can be changed by 360 degrees. That is, the fixed monitor 3 can change the monitoring range with time to acquire monitoring information for 360 degrees around the monitor 3.

The mobile monitor 3 is a mover such as a flying device or a vehicle. For example, the mobile monitor 3 is a drone as a flying device. The mobile monitor 3 includes the monitoring sensor described above and acquires monitoring information on any area in the environment by flying freely within the environment.

The monitor 3 communicates with the route planning device 100 through a communication network or the like. The monitor 3 transmits a monitoring information detection result to the route planning device 100.

The route planning device 100 may acquire obstacle information by receiving the detection result of the monitoring sensor 11 included in the mover 1 from the mover 1. The mover 1 including the monitoring sensor 11 monitors obstacles around the mover 1 by the monitoring sensor 11. The route planning device 100 acquires obstacle information around the mover 1 by receiving the detection result from the monitoring sensor 11 of the mover 1.

The route planning device 100 may acquire information on the mover 1 from the mover 1 as obstacle information for another mover 1. For one mover 1, the other mover 1 may be an obstacle. Therefore, the route planning device 100 uses information of the mover 1 itself acquired from the mover 1 as obstacle information for the other mover 1.

The obstacle information received from the mover 1 includes at least one of the position, velocity, or type of the mover 1. In a case where the mover 1 estimates the state of the mover 1, the obstacle information received from the mover 1 may include a state estimation value estimated by the mover 1. Specifically, the obstacle information may include information on the subject mover 1, such as the current position, velocity, or the like of the subject mover 1, information on the other mover 1, such as the relative position, velocity, or the like of the other mover 1 relative to the subject mover 1, information on obstacles, such as the relative positions, velocities, or the like of the obstacles relative to the subject mover 1, or information on disturbances.

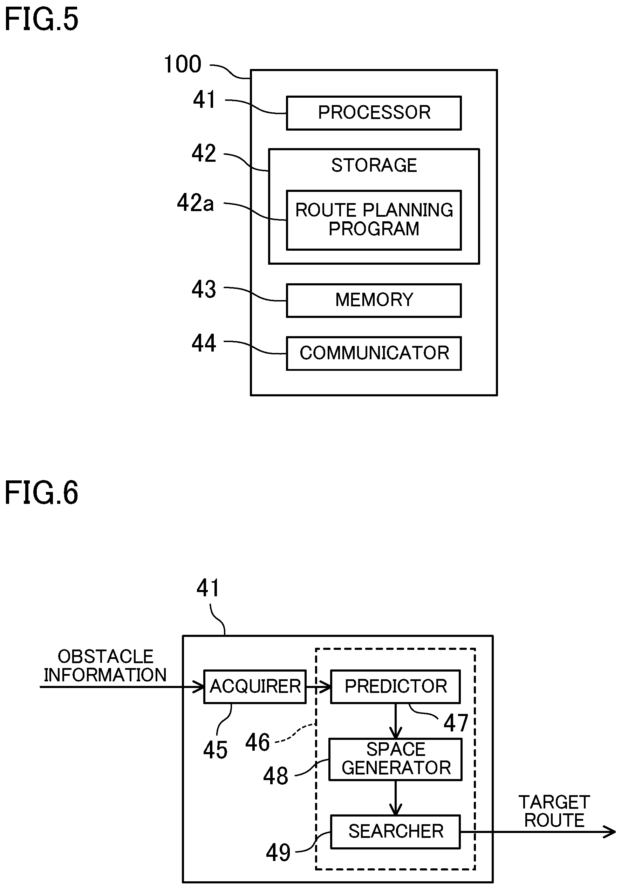

FIG. 5 is a view illustrating a hardware configuration of the route planning device 100. The route planning device 100 includes a processor 41, a storage 42, a memory 43, and a communicator 44.

The processor 41 generates a target route of the mover 1 based on the obstacle information. The processor 41 performs various computation processes. For example, the processor 41 is a processor such as a central processing unit (CPU). The processor 41 may be a micro controller unit (MCU), a micro processor unit (MPU), a field programmable gate array (FPGA), a programmable logic controller (PLC), or system LSI, for example.

The storage 42 stores programs and various types of data to be executed by the processor 41. For example, the storage 42 stores a route planning program 42a. The storage 42 may be, for example, a nonvolatile memory, a hard disc drive (HDD), or a solid state drive (SSD). The memory 43 temporarily stores data or other information. For example, the memory 43 is a volatile memory.

The communicator 44 wirelessly communicates with an external device. The communicator 44 communicates with the mover 1, for example.

FIG. 6 is a functional block diagram of the processor 41. The processor 41 reads the route planning program 42a from the storage 42 and develops the program to the memory 43 to thereby perform various functions. Specifically, the processor 41 functions as an acquirer 45 that acquires obstacle information including information on the positions of obstacles, and as a generator 46 that generates a target route of the mover 1 from a start point S to a goal G. The generator 46 generates the target route based on the obstacle information to avoid interference between the mover 1 and obstacles.

The obstacle information includes at least one of the positions, velocities, or types of the obstacles. Examples of the obstacles may include planimetric features, buildings, mobile objects, construction sites, rough terrain, shallow water, and aquaculture farms. Since the route planning device 100 generates the target route of the mover 1 that performs automated driving, one mover 1 can be an obstacle to another movers 1. Information on a mover includes, for example, the type of the mover. The type of the mover is, for example, a ship, a vehicle, or an aircraft. Furthermore, the type of the mover may include a detailed type such as a large ship, a medium ship, and a small ship.

Information on planimetric features, buildings, construction sites, rough terrain, shallow water, aquaculture farms, and others is stored in the storage 42 or an external database. The acquirer 45 acquires this information from the storage 42 or the database.

The acquirer 45 may acquire information on the mover 1 from the monitoring sensor 11. The acquirer 45 may acquire the information on the mover 1 from the mover 1. The acquisition device 45 may acquire information of the mover 1 itself from the mover 1 as obstacle information. In a case where the mover 1 has the function of detecting another mover 1, the acquirer 45 may acquire information on the other mover 1 from the mover 1.

The acquirer 45 successively acquires obstacle information. Specifically, the monitor 3 transmits monitoring information to the route planning device 100 at appropriate timings. The mover 1 transmits the monitoring information to the route planning device 100 at appropriate timings. The acquirer 45 receives the transmitted monitoring information and stores the information in the storage 42. The acquired obstacle information is accumulated in the storage 42. In this manner, the acquirer 45 acquires a temporal change of the obstacle information.

The generator 46 generates a target route of the mover from the start point S to the goal G. The generator 46 searches for candidates of a target route that avoids interference between the mover 1 and obstacles, and determines the target route based on route costs from among the candidates. The generator 46 predicts a temporal change in the positions of the obstacles to search for the candidates that avoid interference between the mover 1 and the obstacles. The generator 46 successively updates the search for the candidates and the determination of the target route. For example, the start point S is the current position of the mover 1. The goal G is received from the mover 1 by the route planning device 100.

Specifically, the generator 46 includes a predictor 47 that predicts a temporal change in the position of an obstacle, a space generator 48 that generates a search space which is a space for executing route search, and a searcher 49 that searches for candidates of the target route within the search space and determines the target route from among the candidates.

The predictor 47 predicts a temporal change in the position of the obstacle based on the obstacle information. Specifically, the predictor 47 predicts a temporal change in the position of the obstacle based on the obstacle information acquired by the acquirer 45. The predictor 47 obtains a predicted region where the obstacle may exist in the future. In a case where the obstacle is a stationary object, the position thereof does not change. In the case where the obstacle is a stationary object, the position of the obstacle predicted by the predictor 47 remains constant over time. In this example, the position of the obstacle is a two-dimensional position of the obstacle in a two-dimensional space in which the mover 1 moves. In other words, the position of the obstacle is the two-dimensional position of the obstacle in the plane in which the mover 1 moves and excludes the height position.

The predicted region is a region where the obstacle exists or is highly likely to exist in the future. The predictor 47 obtains continuous or discrete predicted regions in accordance with time. The predicted region at each time is a two-dimensional region in the two-dimensional space in which the mover 1 moves. The predicted region has a size that encompasses the planar shape of the obstacle, that is, the two-dimensional shape. The predicted region is expressed by, for example, a circle, an ellipse, or a polygon.

The predictor 47 may perform behavior prediction of the obstacle over time based on the obstacle information to obtain a predicted region where the obstacle may exist. The behavior prediction of the obstacle is performed by various known techniques. For example, in a case where the obstacle information includes the velocity of the obstacle, the predictor 47 may predict a movement range of the obstacle assuming that the obstacle moves at a constant velocity. Alternatively, the predictor 47 may obtain the velocity of the obstacle based on the temporal change in the obstacle information to predict a movement range of the obstacle that moves at a constant velocity of the obtained velocity. Alternatively, the predictor 47 may assume a predicted trajectory of the obstacle using a motion model to obtain a predicted distribution using a filter such as a Kalman filter or a Bayesian filter. At this time, the predictor 47 estimates parameters of the motion model based on the type and the outer shape of the obstacle. Alternatively, the predictor 47 may estimate a motion model or an input distribution using data-driven control. The predictor 47 may estimate a stochastic motion model and an input distribution by machine learning (e.g., Gaussian process or Bayes estimation) using past obstacle information. The predictor 47 may calculate a predicted distribution of the obstacle by a sampling method such as a Markov chain Monte Carlo (MCMC) method. Alternatively, the predictor 47 may approximate the predicted distribution of the obstacle by, for example, moment matching.

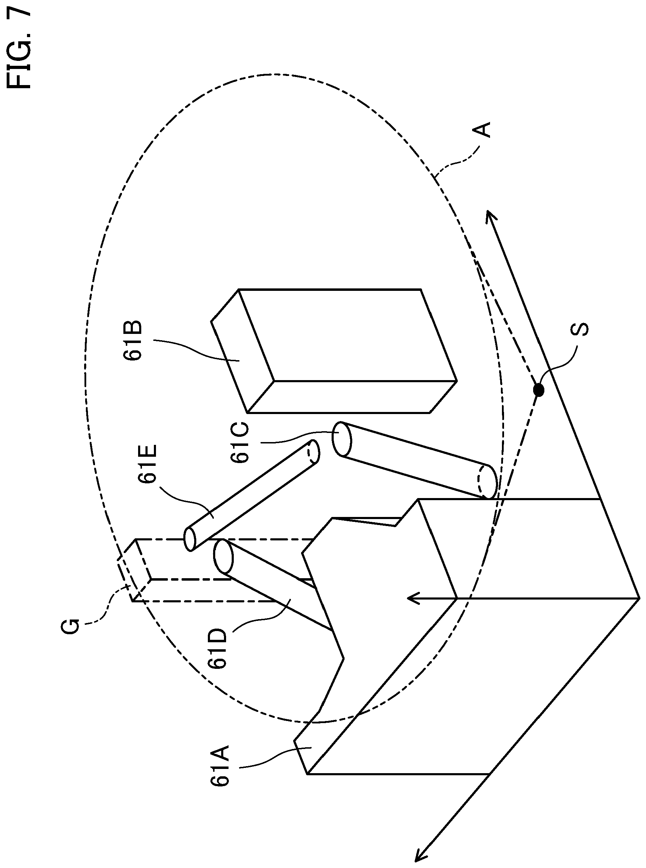

FIG. 7 shows an example of the search space. The search space is a three-dimensional space obtained by adding time as a dimension to the two-dimensional space in which the mover 1 moves. In FIG. 7, the XY plane is the two-dimensional space in which the mover 1 moves. The Z axis is a time axis. This means that as the Z axis increases, time elapses. The start point S is located in a layer in which the time is earliest in the time-axis direction. The goal G is located in a layer where the time has advanced the most in the time-axis direction. In this example, the goal G is represented by a region having a predetermined area.

The space generator 48 creates a three-dimensional obstacle region 61 including a future predicted position of an obstacle in the search space. The space generator 48 creates the obstacle regions 61 based on the predicted region determined by the predictor 47. The predicted region at each time is a two-dimensional region. The space generator 48 arranges two-dimensional predicted regions at individual times in the search space along the time-axis direction, and continuously connects these predicted regions, thereby creating a stereoscopic region. This stereoscopic area is the obstacle region 61. In FIG. 7, five obstacle regions: an obstacle region 61A; an obstacle region 61B, an obstacle region 61C, an obstacle region 61D, and an obstacle region 61E are created. When the obstacle regions are not distinguished from one another, the region will be simply referred to as the "obstacle region 61."

The obstacle regions 61A and 61B correspond to stationary obstacles. For example, the obstacle region 61A corresponds to the pier 91. The obstacle region 61B corresponds to the breakwater 92. The obstacle regions 61A and 61B corresponding to stationary obstacles are regions where the planar shapes of the obstacles simply extend along the time-axis direction. That is, the obstacle regions 61A and 61B have shapes parallel to the time axis. The obstacle regions 61C, 61D, and 61E correspond to moving obstacles. For example, the obstacle regions 61C, 61D, and 61E individually correspond to other movers 1. The obstacle regions 61C, 61D, and 61E corresponding to moving obstacles are regions that are linearly or curvilinearly inclined with respect to the time axis. In a case where movements of obstacles are at constant velocities, the obstacle regions 61C, 61D, and 61E are linearly inclined with respect to the time axis. In a case where movements of the obstacles are at non-constant velocities, the obstacle regions 61C, 61D, and 61E are curvilinearly inclined with respect to the time axis.

The searcher 49 searches for candidates of the target route that does not interfere with the obstacle region 61 in the search space. That is, the searcher 49 searches for candidates in the search space while avoiding the obstacle regions 61. In the search space, since obstacles are regarded as stationary stereoscopic objects, the route is searched without consideration temporal behaviors of the obstacles. The searcher 49 searches for candidates using an RRT-star algorithm. The configuration of each candidate depends on the search method. For example, each candidate includes nodes.

Since the search space has a time axis, the searcher 49 searches for new nodes on the side where time elapses in the time-axis direction when searching for a route. Furthermore, since the mover 1 has a maximum velocity, the range (hereinafter referred to as a "movable range") A in which the mover 1 can move per unit time is limited. In a three-dimensional search space, the movable range A is a conical (inverted-conical in FIG. 7) region that expands from the start point S as the vertex to the side to which time progresses along the time-axis direction. The inclination of the generatrix of the cone with respect to the time axis corresponds to the maximum velocity of the mover 1. The searcher 49 searches for candidates within the movable range A. Furthermore, when searching for a new node connected to one node, the inclination of the edge coupling the two nodes with respect to the time axis is limited by the maximum velocity of the mover 1. That is, a new node connected to one node is searched under a condition that the inclination of the edge with respect to the time axis is less than or equal to a predetermined threshold. The threshold corresponds to the maximum velocity of the mover 1.

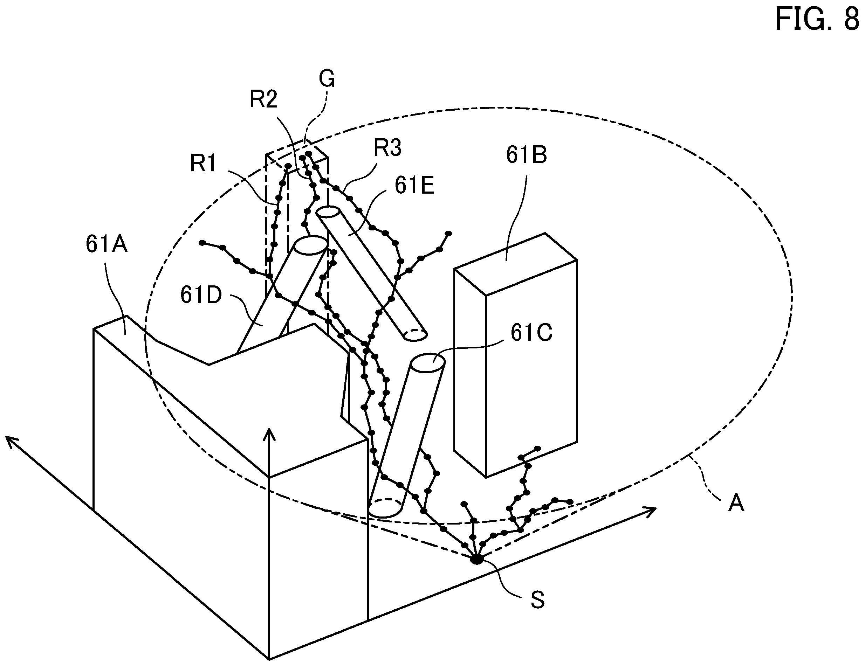

FIG. 8 is a schematic view illustrating candidates searched in the search space. The search space in FIG. 8 is the same as that in FIG. 7. The searcher 49 searches for new nodes that do not interfere with the obstacle region 61 from the start point S toward the side to which time progresses, and generates routes that reach the goal G as candidates of the target route. In the example in FIG. 8, three candidates R1, R2, and R3 are generated by the searcher 49.

At this time, the searcher 49 searches for candidates based on non-holonomic characteristics of the mover 1. For example, the searcher 49 searches for a route under a condition that the mover 1 does not side-slip. Specifically, each candidate includes nodes, and each node is defined by the position and posture (angle) of the mover 1. In setting a new node coupled to one node, the searcher 49 determines the posture of the mover 1 at the new node on the assumption that the mover 1 moves in a circular arc from the one node to the new node. The position of the mover 1 that defines a node is searched in a three-dimensional search space including the time axis, whereas the posture of the mover 1 that defines the node is searched in the two-dimensional space in which the mover 1 moves.

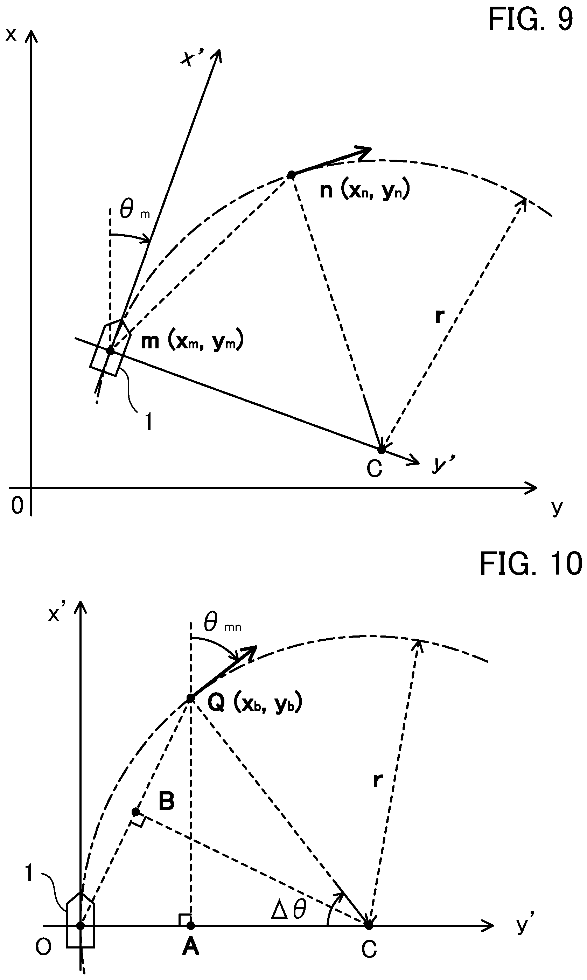

FIG. 9 is an explanatory drawing for explaining search for a new node. FIG. 9 illustrates a two-dimensional space in which the mover 1 moves. The turning radius during movement between nodes is assumed to be constant. The coordinates of an already set node m in a global coordinate system of the two-dimensional space are denoted as (xₘ, yₘ). The posture of the mover 1 is represented by the angle with respect to the positive part of the x axis in the global coordinate system. Suppose that the posture of the mover 1 at the node m is θm. Suppose that the coordinates of a new node n in the global coordinate system of the two-dimensional space are (xₙ, yₙ). Then, the posture matrix of the mover 1 at the node m is expressed by Equation (1):
${R}_{m} = \left(\begin{matrix}cos {θ}_{m} & - sin {θ}_{m} \\ sin {θ}_{m} & cos {θ}_{m}\end{matrix}\right)$ (1)

A local coordinate system of the mover 1 is set, where the traveling direction of the mover 1 is an x' axis, and the direction perpendicular to the traveling direction is a y' axis. The front side in the traveling direction is defined as positive in the x' axis, and the right side in the traveling direction is defined as positive in the y' axis. Suppose that the coordinates of the node n in the local coordinate system are (x_{b}, y_{b}), the following relationship is satisfied:
$\left(\begin{matrix}{x}_{n} \\ {y}_{n}\end{matrix}\right) = {R}_{m} \left(\begin{matrix}{x}_{b} \\ {y}_{b}\end{matrix}\right) + \left(\begin{matrix}{x}_{m} \\ {y}_{m}\end{matrix}\right)$ (2)

In a case where the mover 1 moves from the node m to the node n along a circular arc, the mover 1 turns around a point C located on the y' axis. The traveling direction of the mover 1 at the node n faces the tangential direction of a circle with a radius r about the point C.

FIG. 10 is an explanatory graph showing the positional relationship between one node and a new node in the global coordinate system of the mover 1. In the global coordinate system, the position of the mover 1 at the node m is denoted as a point O, and the position of the mover 1 at the node n is denoted as a point Q. Suppose the an intersection point of a side OC and a perpendicular from the point Q to the side OC is A, and an intersection point of a side CQ and a perpendicular from the point C to the side OQ is B. Since a triangle OAQ and a triangle OBC are analogous, the radius r is expressed by the following equation:
$r = OQ ⋅ \frac{OB}{OA} = \frac{\sqrt{{{x}_{b}}^{2} + {{y}_{b}}^{2}}}{2 \left|{y}_{b}\right|}$ (3)
where Δθ is a turning angle of the mover 1 from the node m to the node n. A change in the posture of the mover 1 at the node n with respect to the mover 1 at the node m, that is, a relative angle θₘₙ, has the following relationship with the turning angle Δθ:
$\left\{\begin{matrix}{θ}_{mn} = Δ θ & {y}_{b} \geq 0 & right turn \\ {θ}_{mn} = - Δ θ & {y}_{b} < 0 & left turn\end{matrix}\right.$ (4)

From the geometrical relationship in FIG. 10, the following relationship is satisfied:
$\left\{\begin{matrix}sin Δ θ = \frac{{x}_{b}}{r} \\ cos Δ θ = \frac{r - \left|{y}_{b}\right|}{r}\end{matrix}\right.$ (5)

Therefore, a relative posture Rnm at the node n relative to the node m is expressed by the following expression:
${R}_{nm} = \left(\begin{matrix}{C}_{mn} & - {S}_{mn} \\ {S}_{mn} & {C}_{mn}\end{matrix}\right) = \left(\begin{matrix}cos Δ θ & - sin Δ θ \\ sin Δ θ & cos Δ θ\end{matrix}\right) , {y}_{b} \geq 0 right turn$ (6)

Therefore, from the chain rule of the posture, a posture matrix Rn at the node n is expressed by the following equation:
${R}_{n} = \left(\begin{matrix}{C}_{n} & - {S}_{n} \\ {S}_{n} & {C}_{n}\end{matrix}\right) = {R}_{nm} {R}_{m}$ (7)

When the position coordinates of a new node are set with respect to one node, the posture of the mover 1 at the new node is determined by the posture matrix of Equation (7). Thus, the searcher 49 sequentially sets the position and posture of the new node and generates one candidate.

At this time, if the turning radius r expressed by Equation (3) is less than a predetermined threshold, the searcher 49 excludes the corresponding node from the candidates for the new node and reselects another node as a new node. For example, the threshold is a minimum turning radius unique to the mover 1. According to the non-holonomic characteristics of the mover 1, the mover 1 cannot turn with an excessively small turning radius r. The searcher 49 may determine the minimum turning radius unique to the mover 1 as an obstacle based on the obstacle information acquired by the acquirer 45. For example, the minimum turning radius corresponding to the size, type, or the like of the mover 1 is stored in the storage 42 beforehand. The searcher 49 reads the minimum turning radius corresponding to the obstacle information from the storage 42.

In the manner described above, the searcher 49 searches for a route based on the non-holonomic characteristics of the mover 1 by determining the posture of the mover 1 at the new node on the premise that the mover 1 turns in a circular arc. Furthermore, in a case where the turning radius r is excessively small, the searcher 49 also searches for a route based on the non-holonomic characteristics of the mover 1 by excluding nodes corresponding to the excessively small turning radius r.

The searcher 49 determines the target route based on route costs from among candidates. That is, the searcher 49 obtains the route cost of each of the candidates. The searcher 49 determines a candidate with a minimum route cost as the target route from among the candidates. The route cost may include various types of costs. For example, the route cost includes a meandering cost concerning the degree of meandering of each of the candidates. The degree of meandering refers to the magnitude of curvature, the number of times of turning, or the number of times of switching the turning direction, for example. A large degree of meandering means a large magnitude of curvature, a large number of times of turning, or a large number of times of switching the turning direction, for example. Normally, if there are no constraints, the mover 1 proceeds in a straight line from the start point S to the goal G. The degree of meandering of the route in this case is small. However, in a case where the mover 1 goes around obstacles, the route meanders. As the number of obstacles around which the mover 1 goes increases, the route becomes more complex and the degree of meandering increases. In other words, a high meandering cost means that the route is complex and the risk of interference between the mover 1 and obstacles is high.

In this example, the meandering cost may include a curvature cost related to the curvature of each of the candidates. A curvature cost corresponding to the curvature is imparted to a portion of each candidate where the mover 1 turns. In a case where multiple turning portions are included, a curvature cost is imparted to each of the turning portions. The curvature cost increases as the curvature of the turning portion increases. As the number of turning portions increases, the overall curvature cost increases.

More specifically, the searcher 49 imparts a curvature cost between each two nodes coupled to each other among the nodes included in each candidate. Each candidate includes nodes that are sequentially coupled as described above. Each candidate is strictly a polygonal line, but the mover 1 actually moves curvilinearly following the nodes. The searcher 49 searches for nodes on the premise that the mover 1 turns, that is, moves in a circular arc, between each two nodes that are coupled to each other. The searcher 49 evaluates the curvature between each two nodes coupled to each other based on the turning radius r of the mover 1. That is, the turning radius r of the mover 1 is the radius of curvature between each two nodes. The searcher 49 imparts a larger curvature cost between the two corresponding nodes as the turning radius r becomes smaller. The nodes may include two nodes that are coupled to each other substantially in a straight line. A small curvature cost is imparted between such two nodes. The searcher 49 evaluates the curvature between all the nodes in each candidate and imparts a curvature cost. Consequently, as the number of turning portions included in the route increases, the total curvature cost of this candidate, that is, the overall curvature cost, increases. Alternatively, in a case where the route includes a turning portion with a large curvature, the overall curvature cost of this candidate increases.

The route cost may include a cost related to distance, that is, a distance cost. For example, in a case where each candidate includes multiple nodes, a distance cost in accordance with the linear distance between each two nodes coupled to each other may be imparted. As the linear distance increases, a greater distance cost is imparted. The overall distance cost of each candidate may be evaluated based on the total distance cost between all the nodes included in each candidate.

The route cost may include a cost related to the degree of proximity to an obstacle, that is, a proximity cost. For example, in a case where each candidate includes nodes, a cost corresponding to the minimum distance between each node and surrounding obstacles may be imparted as a proximity cost. As the minimum distance to the obstacles becomes shorter, a greater proximity cost is imparted. The degree of proximity to obstacles for each candidate can be evaluated by the total value of the proximity costs of each candidate.

The searcher 49 determines one or more target routes from among candidates. In a case where one target route is determined, the searcher 49 determines a candidate with a minimum route cost in the candidates, as the target route. In a case where multiple target routes are determined, the searcher 49 determines multiple candidates in a number corresponding to the number of target routes in order of ascending route cost in the candidates, as the target routes. The route cost includes at least the meandering cost. Accordingly, the searcher 49 determines a candidate with the smallest degree of meandering in the candidates, as the target route. When the mover 1 goes around an obstacle, meandering occurs. In a case where the mover 1 moves through a group of obstacles, the number of times of turning can increase, or the turning can become sharper. That is, in a case where the mover 1 moves in the manner of weaving through obstacles, the degree of meandering of the route is likely to be large. In the case where the mover 1 moves in the manner of weaving through obstacles, the risk of interference of the mover 1 with obstacles also increases. On the other hand, in a case where the mover 1 greatly goes around a group of obstacles, the number of times of turning can decrease, or the turning can become more gentle. That is, the degree of meandering of the route is likely to be small. In this case, the risk of interference of the mover 1 with obstacles also decreases. The searcher 49 determines the target route in consideration of the meandering cost so that a candidate that greatly goes around the group of obstacles tends to be determined as the target route.

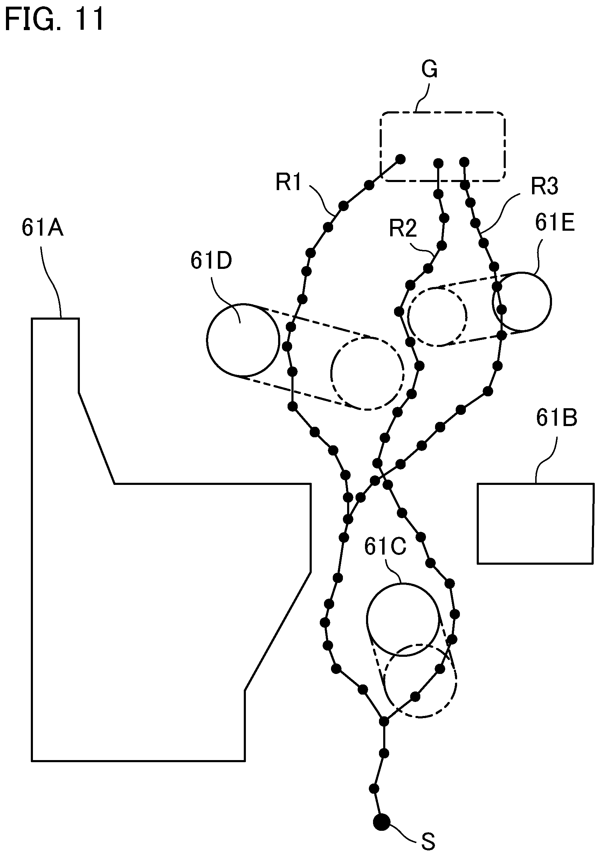

FIG. 11 is a two-dimensional schematic view of searched candidates. In FIG. 11, candidates R1, R2, and R3 are represented on the two-dimensional space in which the mover 1 moves. The candidates R1, R2, and R3 in FIG. 11 correspond to the candidates R1, R2, and R3 in FIG. 8. Regarding the obstacle regions 61C, 61D, and 61E corresponding to moving obstacles, the position of the mover 1 when the mover 1 is at the start point S is represented by a continuous line, and a predicted movement range is represented by a chain double-dashed line.

The candidate R1 passes between the obstacle regions 61A and 61C from the start point S, goes around the obstacle region 61D on the left side, and reaches the goal G. The candidate R1 avoids passage between the obstacle regions 61D and 61E by going around the obstacle region 61D on the left side. Therefore, although the overall distance of the candidate R1 is slightly longer, the number of times of meandering is relatively low in candidate R1, and the curvature of turning portions included in the candidate R1 is relatively small.

The candidate R2 passes between the obstacle regions 61A and 61C from the start point S, passes between the obstacle regions 61D and 61E, and reaches the goal G. The candidate R2 passes between the obstacle regions 61D and 61E. Therefore, although the overall distance of the candidate R2 is relatively short, the number of times of meandering is large in the candidate R2, and the curvature of turning portions included in the candidate R2 is large.

The candidate R3 passes between the obstacle regions 61B and 61C from the start point S, goes around the obstacle region 61E on the right side, and reaches the goal G. The candidate R3 avoids passage between the obstacle regions 61D and 61E by going around the obstacle region 61E on the right side. Therefore, although the overall distance of the candidate R3 is slightly longe, the number of times of meandering is relatively small in the candidate R3, and the curvature of the turning portions included in the candidate R3 is relatively small.

In this example, the route cost includes a distance cost in addition to the meandering cost. Comparing the three candidates R1, R2, and R3, in terms of distance, the candidate R2 has the smallest distance cost, and the candidate R3 has the largest distance cost. Regarding meandering, the candidate R1 has the smallest meandering cost, and the candidate R2 has the largest meandering cost. Regarding the comprehensive route cost including the distance cost and the meandering cost, the candidate R1 has the smallest route cost. That is, although the overall distance of the candidate R1 is relatively long, the degree of meandering is small in the candidate R1, and the risk of interference between the mover 1 and obstacles is low.

In the case of determining one target route, the searcher 49 comprehensively evaluates the risk of interference and the overall distance, and determines the candidate R1 as the target route. In the case of determining multiple, for example, two, target routes, the searcher 49 comprehensively evaluates the risk of interference and the overall distance, and determines the candidates R1 and R3 as the target routes.

The searcher 49 outputs the determined target route. In this example, the target route is transmitted to the target mover 1.

The route cost may include the proximity cost. However, in this example, the proximity costs of the candidates R1, R2, and R3 are all approximately the same.

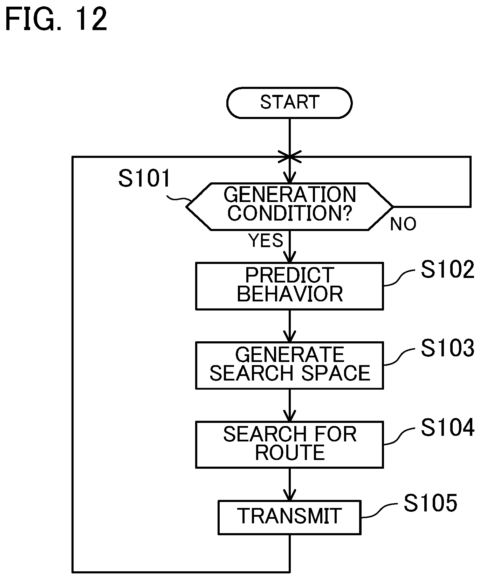

Next, operation of the route planning device 100 will be described with reference to FIG. 12. FIG. 12 is a flowchart of route planning. The route planning device 100 generates a target route of the target mover 1. In a case where multiple target movers 1 exist, the route planning device 100 generates a target route of each of the target movers 1.

In this example, obstacle information is transmitted as appropriate from the monitoring sensor 11, and the acquirer 45 acquires the obstacle information as needed. In addition, the acquirer 45 also acquires obstacle information as appropriate from the mover 1. In other words, acquisition of obstacle information including information on the position of an obstacle is performed in parallel with processes from step S101 described later.

Under this circumstance, the generator 46 determines whether a generation condition is satisfied in step S101. The generation condition is a condition for starting route planning. For example, the condition is that the route planning device 100 receives a request from the mover 1. Specifically, the route planning device 100 executes route planning in response to the request from the mover 1. The generation condition may be arrival of a predetermined generation period. The generation period arrives at predetermined time intervals. That is, the route planning device 100 periodically executes route planning. The generation condition may be that a predetermined time has elapsed since the last target route was generated. Specifically, the route planning device 100 executes route planning again after a certain duration of time has elapsed since the target route was generated. The generation conditions may be a change in the surrounding environment since the last target route was generated. Examples of the change in the surrounding environment includes detection of a new obstacle and a behavior of a known obstacle different from a predicted behavior. The behavior of an obstacle is predicted in order to generate the target route, which will be described later. The generator 46 determines that a change in the surrounding environment occurs when the current position, that is, the position based on the latest obstacle information, of an obstacle is out of the latest predicted region. The generator 46 also determines that a change in the surrounding environment occurs when a new mover 1 is detected based on the latest obstacle information. Specifically, in a case where a predicted behavior of an obstacle serving as a premise for the previous target route deviates from an actual behavior of the obstacle, the route planning device 100 executes route planning again. The generation condition may be that any one of the reception of the request, the arrival of the generation period, the lapse of the predetermined time, or the change in the surrounding environment is satisfied.

If the generation condition is not satisfied, the generator 46 repeats step S101 and waits for satisfaction of the generation condition.

If the generation condition is satisfied, the predictor 47 predicts a behavior of obstacles based on the obstacle information in step S102. Specifically, the predictor 47 determines whether the obstacle is stationary or moving. If the obstacle moves, the predictor 47 predicts a temporal change in the position of the obstacle, that is, movement.

Subsequently, the space generator 48 generates a search space in step S103. Specifically, the space generator 48 creates a three-dimensional obstacle region 61 in a three-dimensional space obtained by adding the time axis to a two-dimensional space in which the mover 1 moves.

Then, in step S104, the searcher 49 searches for candidates of a target route within the search space. The searcher 49 searches for candidates in which the mover 1 does not interfere with obstacle regions. At this time, the searcher 49 searches for a route based on the non-holonomic characteristics of the mover 1. Specifically, when the searcher 49 searches for a next node from one node, the searcher 49 searches for the next node at which the mover 1 can move in accordance with the non-holonomic characteristics of the mover 1.

Further, the searcher 49 determines the target route based on the route costs from among the candidates. The searcher 49 determines a candidate with a minimum route cost from among the candidates, as the target route. The route cost includes the meandering cost. Accordingly, a candidate with gentle meandering or with a small number of times of meandering is determined as the target route. The route cost may further include the distance cost or the proximity cost. Accordingly, a candidate that has a short overall distance or that does not approach an obstacle excessively, as well as that has a small degree of meandering, is determined as the target route. Step S104 corresponds to generating a target route of the mover from the start point to the goal based on the obstacle information to avoid interference between the mover and the obstacle.

When the target route is determined, the generator 46 transmits the target route to the target mover 1 in step S105.

After the target route has been transmitted, the generator 46 determines whether the generation condition is satisfied again in step S101. Accordingly, the generation of the target route is repeatedly performed. The generation of the target route is repeated until the target mover 1 reaches the goal.

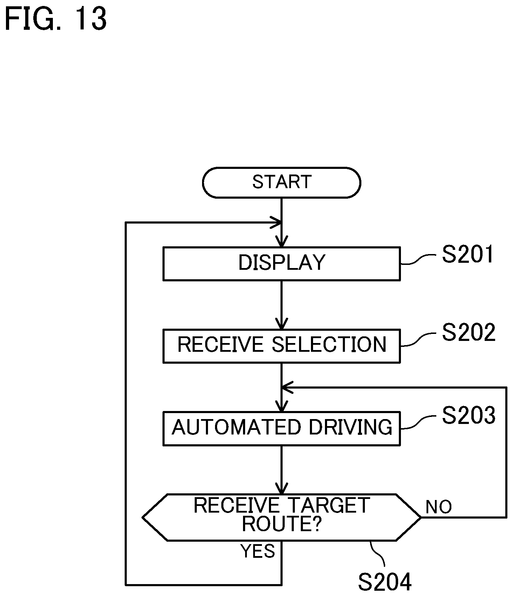

Next, operation of the mover 1 will be described with reference to FIG. 13. FIG. 13 is a flowchart of automated driving. The mover 1 is configured to switch between manual driving and automated driving. When switching to automated driving, the controller 2 transmits a request for a target route to the route planning device 100. Here, a case where multiple target routes are sent from the route planning device 100 will be described.

When the controller 2 receives target routes from the route planning device 100, in step S201, the display 15 displays images of the target routes. Specifically, the image generator 211 generates images of the target routes and outputs the generated images to the display 15. For example, in a case where two target routes are received from the route planning device 100, the display 15 displays a fairway map including the two target routes. At this time, the display 15 displays priorities together with the target routes.

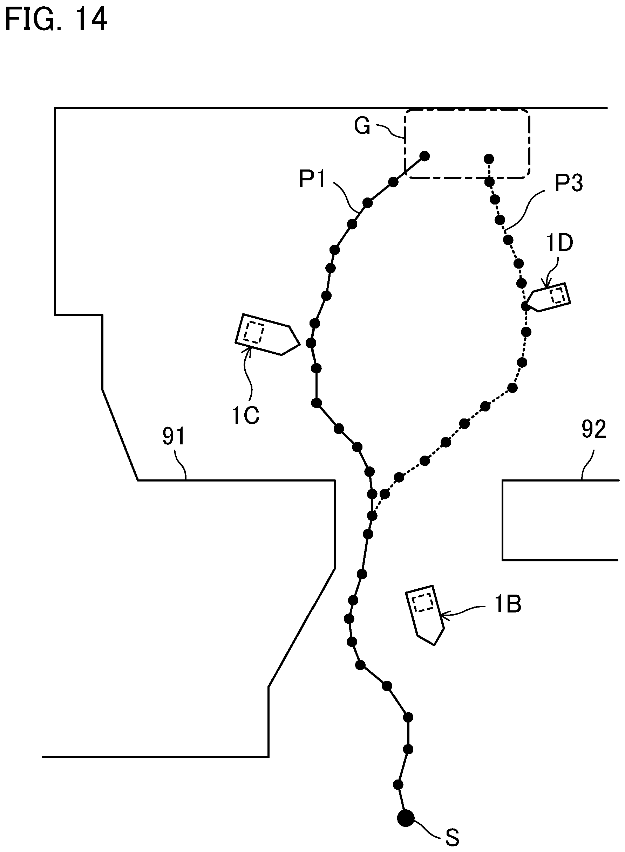

FIG. 14 shows an example of an image displayed by the display 15. A target route P1 corresponds to the candidate R1 in FIG. 10, and a target route P3 corresponds to the candidate R3 in FIG. 10. The route cost of the target route P1 is smaller than the route cost of the target route P3. The priority of the target route P1 is the highest. In the example of FIG. 14, the display 15 marks the target route P1 with the highest priority using a continuous line, and the target route P3 using a broken line. The display 15 may display the route costs of the target routes P1 and P3. A user can select one target route via the inputter 16 with reference to the target routes displayed on the display 15.

Subsequently, when the user selects one target route from among the target routes via the inputter 16, in step S202, the receiver 212 receives the selection of the target route from the user and sets the selected target route as the target route for use in automated driving.

For example, when the target route P1 is selected by the user in the image illustrated in FIG. 14, the receiver 212 sets the target route P1 as the target route for automated driving. The user may also select the target route P3.

When the target route is set, the controller 2 performs automated driving in step S203. The controller 2 outputs an instruction operation quantity to the actuator 12 to perform automated driving of the mover 1 so that the mover 1 moves along the set target route.

Thereafter, in step S204, the controller 2 determines whether the target route is received from the route planning device 100. The route planning device 100 updates the target route as appropriate. That is, the controller 2 repeats step S204 to thereby wait for reception of the updated target route.

When the controller 2 receives the target route, the process returns to step S201. That is, the display 15 updates the display of the target route. In step S202 after the target route has been updated, if there is no selection input from the user, the controller 2 sets a target route close to the target route set before the update as a target route for use in automated driving, and continues automated driving in step S203. That is, after automated driving has started, unless the user performs operation of changing the target route, the initially selected target route is continuously adjusted by updates, and automated driving continues along this target route.

In a case where only one target route is output from the route planning device 100, step S202 is deleted from the flowchart in FIG. 13. The display 15 displays the received target route (step S201), and the controller 2 performs automated driving according to this target route (step S203). Then, when the target route is updated, the display 15 displays the updated target route (step S201), and the controller 2 performs automated driving according to the updated target route (step S203).

According to this route planning, a target route with a small degree of meandering is generated. A small degree of meandering correlates with few detours around obstacles by the mover 1. If detours around obstacles is few, the risk of interference of the mover 1 with obstacles is low. For example, in a case where multiple obstacles are present, a route that goes around obstacles as a whole is determined as the target route rather than a route that moves the minimum distance by weaving between obstacles. This significantly reduces the risk of interference of the mover 1 with the obstacles.

Furthermore, a temporal change in the position of an obstacle is predicted, and based on a predicted region of the obstacle, a route that avoids interference between the mover 1 and the obstacle is searched. This enhances accuracy of route generation that avoids interference with the obstacle.

In addition, the route search is performed in a three-dimensional search space obtained by adding the time axis to the two-dimensional space in which the mover 1 moves. As a result, a moving obstacle is regarded as a stationary stereoscopic object, and the route is searched. Consequently, a computation load of the route search can be alleviated.

The route planning device 100 updates the target route by repeatedly executing such route planning. Obstacles may exhibit an unexpected behavior. Even in the case of performing route planning based on the predicted behavior of a moving obstacle, the target route is updated to address the unexpected behavior of the obstacle.

The route cost referenced when selecting the target route includes the meandering cost related to the degree of meandering. The meandering cost includes the curvature cost related to the curvature in the route of each candidate. A large curvature of the route means that the mover 1 makes a sharp turn. The sharp turn may indicate the possibility of sudden detour around an obstacle by the mover 1. In other words, a low curvature cost means a small number of sudden detours around obstacles, and consequently, a low risk of interference between the mover 1 and the obstacles. In this manner, by taking the curvature of the route into consideration, the target route can be determined in consideration of the risk of interference between the mover 1 and obstacles.

Specifically, a curvature cost corresponding to the curvature is imparted to turning portions of the route of each candidate where the mover 1 turns. More specifically, when searching for candidates of the target route, the non-holonomic characteristics of the mover 1 are taken into consideration, and search for nodes is performed on the premise that the mover 1 moves by turning. When a node is searched, the turning radius r, that is, the radius of curvature, of the mover 1 is obtained. A curvature cost is imparted based on the turning radius r between each two nodes coupled to each other. As a result, the curvature of the route is evaluated in consideration of an actual behavior of the mover 1.

As described above, by searching for candidates based on the non-holonomic characteristics of the mover 1, it is possible to search for a route that strictly reflects the actual behavior of the mover 1. Furthermore, in addition to the search for candidates, the curvature of the route can be derived.

By determining the posture of the mover 1 at a new node in the two-dimensional space in which the mover 1 moves while searching for the position of the new node in the three-dimensional search space including the time axis, it is possible to easily search for a route that achieves both avoidance of interference with a moving obstacle and movement of the mover 1 according to the non-holonomic characteristics.

Since the target route is displayed by the display 15 of the mover 1, the user, that is, the passenger, can check the target route in automated driving. For example, if the future route is unknown, the user may feel anxiety or other emotions with respect to the behavior of the mover 1. However, the user can reduce anxiety and the like about the behavior of the mover 1 by knowing the future route. Alternatively, in a case where the target route for automated driving is a route undesirable for the user, the user can switch from automated driving to manual driving.

Furthermore, the route planning device 100 outputs target routes, and the display 15 displays target routes. Accordingly, the user can execute determination of one target route from among the target routes. In other words, target routes selected based on the route cost are presented to the user, and the user can then determine a final target route in consideration of factors other than the route costs.

At this time, the display 15 also displays the priorities of the target routes, selection of the target route by the user can be assisted.

### <<OTHER EMBODIMENTS>>

In the foregoing section, the embodiment has been described as an example of the technique disclosed in the present application. The technique disclosed here, however, is not limited to this embodiment, and is applicable to other embodiments obtained by changes, replacements, additions, and/or omissions as necessary. Components described in the above embodiment may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

For example, the mover 1 that receives the target route is not limited to the example described above. For example, the mover 1 may be, for example, a vehicle, an autonomously operated robot (e.g., a carrier pallet), or a flying device (e.g., a drone). As long as the mover 1 is capable of executing automated driving, any optional mover may be employed. Another mover 1 that can be an obstacle in generation of the target route does not need to have the automated driving function. The other mover 1 may be a living organism such as a person. For example, the other mover 1 may be a pedestrian traveling on a road or an operator working on a site. The number of movers 1 included in the driving assistance system 1000 is not limited to the example illustrated in FIG. 1 and may be any number.

The actuator 12 is an actuator concerning movement of the mover 1. The actuator 12 is not limited to an electric motor, an engine, or a tiller. In a case where the mover 1 is a vehicle, the actuator 12 may be a steering device. In a case where the mover 1 is a drone, the propellers are actuators.

The configuration of the controller 2 of the mover 1 is not limited to the configuration described above. As long as the mover 1 can perform automated driving along the target route, any configuration may be employed. For example, the controller 2 may not estimate the state of the subject mover 1 or another mover 1, and may acquire an estimated state of the subject mover 1 or the other mover 1 from an external device such as the route planning device 100. Alternatively, the controller 2 may estimate the state of the subject mover 1, and the state of the other mover 1 may be estimated by the other mover 1 or the route planning device 100, for example. In this case, the controller 2 acquires the estimation results of the state of the other mover 1 from an external device. Furthermore, generation of the target trajectory, correction of the target trajectory, and calculation of the operation quantity may employ any methods. For example, the target trajectory may be output using a model leaned by machine learning, with the state quantity of the subject mover 1 and the state quantity of the other mover 1 as inputs.

The route planning device 100 is not limited to the control tower 120 and may be located at any place. For example, the route planning device 100 may be located in the mover 1 that performs automated driving. In this case, the mover 1 generates a target route by the route planning device 100 and performs automated driving along the target route by the controller 2. The route planning device 100 may not be a single device and may be composed of multiple devices.

The route planning device 100 may request obstacle information from the monitoring sensor 11, the mover 1, or the like. For example, the acquirer 45 may periodically request obstacle information from the monitoring sensor 11 and the mover 1, and acquire replies of obstacle information from the monitoring sensor 11, the mover 1, or the like.

The generation of the target route may employ any method. For example, the predicted region of a moving obstacle at each time may not have the same area. Since prediction of the position of obstacles becomes more difficult with time, the predicted region at each time may become larger with time. That is, the obstacle region may be a region that enlarges in the direction in which time progresses.

The route search is not limited to RRT-star. The route search may use search algorithms such as A-star, Hybrid A-star, kinodynamic RRT-star, or RRT. The route search may not be performed based on the non-holonomic characteristics of the mover 1.

The curvature of curved portions included in each candidate route is not limited to that based on the turning radius r of the mover 1 at the time of node search. The curvature of the curved section can be evaluated by any method. For example, the curvature of the curved portion may be obtained by curvilinearly interpolating a route defined by nodes.

The route cost includes at least a meandering cost. The route cost may include, in addition to the meandering cost, at least one of the distance cost, the proximity cost, or other costs.

The display by the display 15 is not necessary. Generation of the target route by the route planning device 100 and automated driving of the mover 1 along the target route may be performed without presentation of the target route to the user.

Even in the case of displaying the target route on the display 15, the display 15 may display only one target route used for automated driving. For example, the route planning device 100 may output only one target route. Alternatively, the display 15 may display only the target route with the highest priority among the target routes output from the route planning device 100, for example, the target route with the smallest route cost.

The flowcharts illustrated in FIGS. 12 and 14 are merely examples. The steps in the flowcharts may be appropriately changed, replaced, added, omitted, and so forth. Further, the order of steps in the flowchart may be changed or serial processings may be performed in parallel. For example, the generation condition of step S101 can be set arbitrarily. The generation condition may be at least one or a combination of the reception of the request, the arrival of the generation period, the lapse of the predetermined time, or the change in the surrounding environment.

Functions performed by constitutional elements described herein may be implemented in circuitry or processing circuitry including a general-purpose processor, an application-specific processor, an integrated circuit, an application specific integrated circuit (ASIC), a central processing unit (CPU), conventional circuitry, and/or a combination thereof programmed to perform the functions described herein. A processor includes transistors and other circuits, and is regarded as circuitry or arithmetic circuitry. A processor may be a programmed processor that performs programs stored in a memory.

Circuitry, a unit, and means herein are hardware that is programmed to perform or performs the described functions. The hardware may be any hardware disclosed herein, or any hardware programmed or known to perform the functions described.

If the hardware is a processor considered to be of a type of circuitry, the circuitry, means, or a unit is a combination of hardware and software used to configure the hardware and/or the processor.

### [Aspects]

The embodiment described above are a specific example of the following aspects.

(Aspect 1) A route planning device 100 includes: an acquirer 45 that acquires obstacle information including information on a position of an obstacle; and a generator 46 that generates a target route of a mover 1 from a start point S to a goal G based on the obstacle information such that the target route avoids interference between the mover 1 and the obstacle, the generator 46 searches for candidates of the target route and determines the target route based on route costs from among the candidates, and each of the route costs includes a meandering cost related to a degree of meandering in each of the candidates.

In this configuration, since the route cost includes the meandering cost, the target route is determined in consideration of the degree of meandering of each candidate. If the degree of meandering of the route is large, there is a possibility that the route includes a sudden detour around an obstacle by the mover 1 or a large number of detours around obstacles by the mover 1. In automated driving, it is natural for the mover 1 to avoid interference with an obstacle while moving, but if the detour is sudden or the number of detours is large, the risk of interference between the mover 1 and obstacles increases. By determining the target route in consideration of the degree of meandering of the route, a target route with a low risk of interference between the mover 1 and an obstacle is generated.

(Aspect 2) In the route planning device 100 of Aspect 1, the generator 46 predicts a temporal change in a position of the obstacle to search for the candidates that avoid interference between the mover 1 and the obstacle.

In this configuration, candidates that avoid interference between the mover 1 and the obstacle are searched after a temporal change in the position of the obstacle has been predicted. Thus, a target route that anticipates a future behavior of the obstacle is generated. In other words, a target route that avoids interference between the mover 1 and the obstacle is generated even with respect to a moving obstacle.

(Aspect 3) In the route planning device 100 of Aspect 1 and Aspect 2, the generator 46 generates a three-dimensional obstacle region 61 including a future predicted position of the obstacle in a three-dimensional space obtained by adding time as a dimension to a two-dimensional space in which the mover 1 moves, and searches for the candidates while avoiding the obstacle region in the three-dimensional space.

In this configuration, a moving obstacle is regarded as a stationary stereoscopic object, and the route can be searched. Since it is not necessary to search for a route while considering a dynamic behavior of the obstacle, the computation load of the route search can be alleviated.

(Aspect 4) In the route planning device 100 of any one of Aspects 1 to 3, the meandering cost includes a curvature cost related to a curvature in each of the candidates.

In this configuration, the curvature of each candidate is evaluated as the meandering cost. The meandering cost of candidates with high route curvature increases, and these candidates are less likely to be selected as target routes. The curvature of the route is correlated with the steepness of a turn during meandering. That is, when the curvature is large, the turn becomes sharp. A sharp turn may indicate the possibility of high-risk movement, such as a sudden detour around an obstacle. By including the curvature cost as the meandering cost, candidates with gentle turns or with fewer steep turns are more likely to be selected as the target route.

(Aspect 5) In the route planning device 100 of any one of Aspects 1 to 4, the generator 46 searches for the candidates based on a non-holonomic characteristic of the mover 1.

In this configuration, the route search is performed while eliminating an unrealistic behavior of the mover 1. For example, a route is searched based on a smooth behavior that does not include movements such as a side-slip of mover 1. As a result, a target route that reflects an actual behavior of the mover 1 is generated.

For example, when route search is performed assuming that turning rather than bending is performed when changing the traveling direction as the non-holonomic characteristics of the mover 1, it becomes easier to evaluate the curvature cost of each candidate. Specifically, by assuming the turn of the mover 1 when searching for new nodes defining the route, the curvature of turning portions of the route can be evaluated based on the turning radius r of the mover 1 used at the time of searching for the new nodes.

(Aspect 6) The route planning device 100 of any one of Aspects 1 to 5, wherein the generator 46 successively updates search for the candidates and determination of the target route.

This configuration can address a temporal changes in the surrounding environment. Specifically, the target route is generated based on the position of the obstacle so that the mover 1 and the obstacle do not interfere with each other. The obstacle moves in some cases. By successively updating the target route, a target route that corresponds to the moving obstacle can be generated.

(Aspect 7) A driving assistance system 1000 includes: the route planning device 100 of any one of Aspects 1 to 6; a display 15 that displays the target route from the route planning device 100 and is mounted on a mover 1 that performs automated driving.

In this configuration, the passenger of the mover 1 can check the target route used in automated driving via the display 15. Accordingly, the passenger can predict a future behavior of the mover 1 in automated driving.

(Aspect 8) In the driving assistance system 1000 of Aspect 7, the route planning device 100 determines the target routes from the candidates, and the display 15 displays the target routes.

In this configuration, the route planning device 100 determines the target routes rather than one target route. The display 15 displays the target routes.

(Aspect 9) The driving assistance system 1000 of Aspect 7 or 8 further includes a receiver 212 that receives, from a user, selection of one of the target routes for use in automated driving of the mover 1, from among the target routes displayed on the display 15.

In this configuration, the passenger can select one target route for use in automated driving from among the target routes presented by the display 15. The route planning device 100 narrows down the target routes to several target routes based on the route cost, and the user can determine a final target route also in consideration of factors other than the route cost, from among the target routes.

(Aspect 10) In the driving assistance system 1000 of any one of Aspects 7 to 9, the route planning device 100 assigns priorities in accordance with the route costs to the target routes, and the display 15 further displays the priorities of the target routes.

In this configuration, the passenger can know the superiority or inferiority of target routes displayed on the display 15, particularly concerning the route cost. The priority helps the passenger in selecting a target route.

(Aspect 11) A route planning method includes acquiring obstacle information including information on a position of an obstacle; and generating a target of the mover 1 from a start point S to a goal G such that the target route of a mover 1 avoids interference between the mover 1 and the obstacle, the generating the target route includes searching for candidates of the target route and determining the target route based on route costs from among the candidates, and each of the route costs includes a meandering cost related to a degree of meandering in each of the candidates.

In this configuration, since the route cost includes the meandering cost, the target route is determined in consideration of the degree of meandering of each candidate. If the degree of meandering of the route is large, there is a possibility that the route includes a sudden detour around the obstacle by the mover 1 or many detours around obstacles by the mover 1. In automated driving, it is natural for the mover 1 to avoid interference with an obstacle while moving, but if the detour is sudden or the number of detours is large, the risk of interference between the mover 1 and obstacles is high. By determining the target route in consideration of the degree of meandering of the route, a target route with a low risk of interference between the mover 1 and obstacles is generated.

(Aspect 12) A route planning program 42a that causes a computer to execute the functions of: acquiring obstacle information including information on a position of an obstacle; and generating a target route of a mover 1 from a start point S to a goal G based on the obstacle information such that the garget route avoids interference between the mover 1 and the obstacle, the function of generating the target route searches for candidate of the target route and determines the target route based on route costs from among the candidates, and each of the route costs includes a meandering cost related to a degree of meandering in each of the candidates.

In this configuration, since the route cost includes the meandering cost, the target route is determined in consideration of the degree of meandering of each candidate. If the degree of meandering of the route is large, there is a possibility that the route includes a sudden detour around the obstacle by the mover 1 or many detours around obstacles by the mover 1. In automated driving, it is natural for the mover 1 to avoid interference with an obstacle while moving, but if the detour is sudden or the number of detours is large, the risk of interference between the mover 1 and obstacles is high. By determining the target route in consideration of the degree of meandering of the route, a target route with a low risk of interference between the mover 1 and obstacles is generated.

## Claims

1. A route planning device comprising:
an acquirer that acquires obstacle information including information on a position of an obstacle; and
a generator that generates a target route of a mover from a start point to a goal based on the obstacle information such that the target route avoids interference between the mover and the obstacle, wherein
the generator searches for candidates of the target route and determines the target route based on route costs from among the candidates, and
each of the route costs includes a meandering cost related to a degree of meandering in each of the candidates.

2. The route planning device according to claim 1, wherein
the generator predicts a temporal change in a position of the obstacle to search for the candidates that avoid interference between the mover and the obstacle.

3. The route planning device according to claim 2, wherein
the generator
generates a three-dimensional obstacle region including a future predicted position of the obstacle in a three-dimensional space obtained by adding time as a dimension to a two-dimensional space in which the mover moves, and
searches for the candidates while avoiding the obstacle region in the three-dimensional space.

4. The route planning device according to claim 1, wherein
the meandering cost includes a curvature cost related to a curvature in each of the candidates.

5. The route planning device according to claim 1, wherein
the generator searches for the candidates based on a non-holonomic characteristic of the mover.

6. The route planning device according to claim 1, wherein
the generator successively updates search for the candidates and determination of the target route.

7. A driving assistance system comprising:
the route planning device according to any one of claims 1 to 6; and
a display that displays the target route from the route planning device and is mounted on a mover that performs automated driving.

8. The driving assistance system according to claim 7, wherein
the route planning device determines the target routes from among the candidates, and
the display displays the target routes.

9. The driving assistance system according to claim 8, further comprising
a receiver that receives, from a user, selection of one of the target routes for use in automated driving of the mover, from among the target routes displayed on the display.

10. The driving assistance system according to claim 9, wherein
the route planning device assigns priorities in accordance with the route costs to the target routes, and
the display further displays the priorities of the target routes.

11. A route planning method comprising:
acquiring obstacle information including information on an obstacle; and
generating a target route of a mover from a start point to a goal based on the obstacle information such that the target route avoids interference between the mover and the obstacle, wherein
the generating the target route includes searching for candidates of the target route and determining the target route based on route costs from among the candidates, and
each of the route costs includes a meandering cost related to a degree of meandering in each of the candidates.

12. A route planning program that causes a computer to execute the functions of:
acquiring obstacle information including information on a position of an obstacle; and
generating a target route of a mover from a start point to a goal based on the obstacle information such that the target route avoids interference between the mover and the obstacle, wherein
the function of generating the target route searches for candidates of the target route and determines the target route based on route costs from among the candidates, and
each of the route costs includes a meandering cost related to a degree of meandering in each of the candidates.
